(19) **Europäisches Patentamt**

**European Patent Office**

**Office européen des brevets**

(11) **EP 1 385 156 B1**

(12) **EUROPEAN PATENT SPECIFICATION**

(45) Date of publication and mention
of the grant of the patent:
**08.11.2006 Bulletin 2006/45**

(51) Int Cl.:
*G11B 7/125* (2006.01)  *G11B 7/135* (2006.01)
*G05B 13/02* (2006.01)

(21) Application number: **03015552.7**

(22) Date of filing: **10.07.2003**

(54) **Spherical aberration correcting method and apparatus**

Verfahren und Gerät zur Korrektur der sphärischen Aberration

Méthode et appareil pour corriger l'abérration sphérique

(84) Designated Contracting States:
**DE FR GB**

(30) Priority: **25.07.2002 JP 2002216683**

(43) Date of publication of application:
**28.01.2004 Bulletin 2004/05**

(73) Proprietor: **Pioneer Corporation**
**Meguro-ku,**
**Tokyo (JP)**

(72) Inventors:
• **Sasaki, Yoshio**
**2610 Hanazono 4-chome,**
**Tokorozawa-shi (JP)**

• **Tanaka, Hisao**
**2610 Hanazono 4-chome,**
**Tokorozawa-shi (JP)**
• **Nakagawa, Hidenori**
**2610 Hanazono 4-chome,**
**Tokorozawa-shi (JP)**

(74) Representative: **Reinhard - Skuhra - Weise &**
**Partner**
**Postfach 44 01 51**
**80750 München (DE)**

(56) References cited:
EP-A- 1 223 576   US-A- 3 984 663
US-A1- 2001 026 522   US-A1- 2002 067 553
US-A1- 2002 181 367   US-A1- 2002 195 540
US-A1- 2003 021 219   US-B1- 6 399 932

**Description**

BACKGROUND OF THE INVENTION

1. Field of the Invention

The present invention relates to a technical field of spherical aberration correcting method and apparatus in a recording system for recording bits of information onto an optical recording medium.

2. Description of the Related Art

It is general that a transparent layer is formed on a recording surface of an optical disk serving as an optical recording medium. The transparent layer has a predetermined thickness and is placed to cover the recording surface of the optical disk so that the recording surface can be protected.

An optical information recording/reproducing system is configured to irradiate a reading or recording optical beam onto the recording surface of the optical disk through the transparent layer to read or record data from or to the optical disk.

However, in reality, it is difficult to form the optical disk so that each portion of the transport layer falls within a specified range of thickness. As a result, a usual optical disk has as much a thickness error as several tens of micro-meter (μm) due to irregularities over the transparent layer. Such an error in the thickness of the optical disk causes spherical aberration to occur in an optical beam irradiated onto the optical disk, thus reducing accuracy of reading or recording data from or to the optical disk.

For actually recording bits of information onto the optical disk, changes in recording conditions including the circumferential temperature at the start of recording and the like will cause the spherical aberration to fluctuate.

The more accelerated the rate of recording is in the future, the more influenced the spherical aberration to a recording characteristic will be, so that it is necessary to prevent the spherical aberration as much as possible. The foregoing problem, though it is mere one example, is included in the difficulties which should be solved by the present invention.

US-A1-2001026522 discloses a spherical aberration correction system comprising a unit to read a piece of information through radiation of an optical beam onto an optical disk, a reflected-light level detecting unit configured to detect a level of light formed of the optical beam reflected from the optical disk under a reading operation for the information, a correction amount deciding unit configured to decide a correction amount for spherical aberration on the basis of the level of the reflected-light; and a spherical aberration correction unit configured to correct the spherical aberration by using the correction amount.

SUMMARY OF THE INVENTION

An object of the present invention is to provide, with due consideration to the difficulties of the above conventional technique, a spherical aberration correcting method and apparatus that are capable of effectively correcting spherical aberration.

According to one aspect of the present invention, there is provided a spherical aberration correcting apparatus comprising the features of claim 1.

According to another aspect of the present invention, there is provided a spherical aberration correcting method comprising the steps of claim 6.

BRIEF DESCRIPTION OF THE DRAWINGS

Other objects and aspects of the present invention will become apparent from the following description of embodiments with reference to the accompanying drawings in which:

Fig. 1 is a view showing a schematic configuration of a spherical aberration apparatus according to a first embodiment of the present invention;
Fig. 2 is a view a schematic configuration of the information recording system to which the spherical aberration correcting unit is applied;
Fig. 3A illustrates examples of recording marks (pits) formed on the optical disk according to the second embodiment;
Fig. 3B illustrates levels of reflected-light from the recording marks shown in Fig. 3A;
Fig. 3C illustrates waveforms of recording pulses each composed of a top pulse and multi pulses successive thereto, recording pulses which correspond to the recording marks shown in Fig. 3A;

Fig. 3D illustrates detected signals corresponding to reflected-lights from the recording marks shown in Fig. 3A;

Fig. 3E illustrates waveforms of signals obtained by eliminating high frequency components from the detected signals shown in Fig. 3D;

Fig. 4A is a block diagram showing a circuit structure of a circuit for obtaining a pit level according to the second embodiment;

Fig. 4B is a block diagram showing another circuit structure of a peak hold circuit for obtaining a pit level according to the second embodiment;

Fig. 4C is a block diagram showing another circuit structure of a sample/hold circuit for obtaining a pit level according to the second embodiment;

Fig. 5A is a view showing a correlation between the spherical aberration and the pit level in the case of using the DVD-R serving as the optical disk according to the second embodiment;

Fig. 5B is a view showing a correlation between a pit ratio and the spherical aberration according to the second embodiment;

Fig. 6 is a view illustrating a correlation between a spherical aberration and a jitter, and a correlation between the spherical aberration and a β (beta) value in the case of using a DVD-R serving as an optical disk according to the second embodiment;

Fig. 7 is a view showing a correlation between the spherical aberration and a recording power according to the second embodiment;

Fig. 8 is a flowchart showing one process of deciding a correction amount of spherical aberration according to the second embodiment;

Fig. 9 is a flowchart showing another process of deciding a correction amount of spherical aberration according to the second embodiment;

Fig. 10A is a view typically illustrating a structure of a liquid crystal type of spherical aberration correcting unit according to the second embodiment; and

Fig. 10B is a view illustrating a structure of an optical element type of the spherical aberration correcting unit according to the second embodiment.

## DETAILED DESCRIPTION OF PREFERRED EMBODIMENTS

Preferred embodiments of a spherical aberration correcting method and apparatus of the present invention will now be described hereinafter with reference to the accompanying drawings.

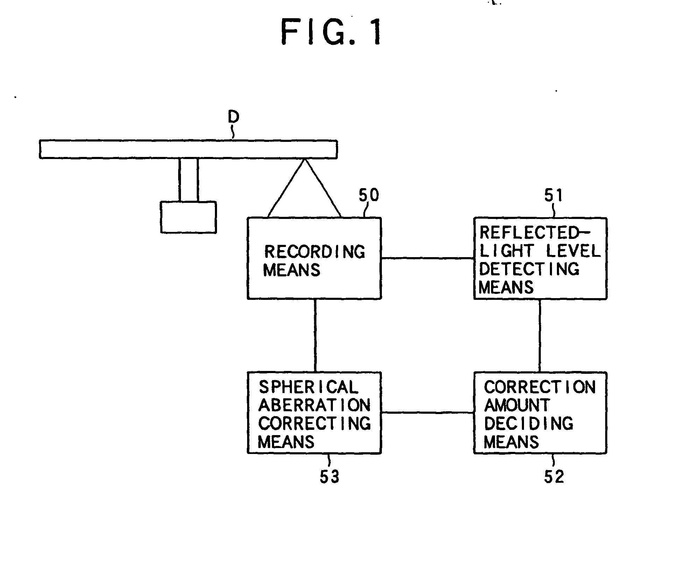

Fig. 1 is a view showing a schematic configuration of a spherical aberration correcting apparatus according to a first embodiment of the present invention. In Fig. 1, an optical disk D is formed of a type of optical recording medium which is rotatable and allows information to be recorded thereon.

The optical disk D is provided a recording surface and a transparent layer formed on the recording surface. The transparent layer has a predetermined thickness and is produced to cover over the recording surface of the optical disk for protecting the recording surface.

The spherical aberration correcting apparatus according to the first embodiment comprises a recording means 50, a reflected-light level detecting means 51, a correction amount deciding means 52, and a spherical aberration correcting means 53.

The recording means 50 is configured to perform bits of information recording on an optical disk that serves as an object for recording bits of information. The recording means 50 is, when performing the recording, configured to irradiate an optical beam onto recording area of the recording surface of the optical disk to form pits as recorded signal (recorded data) thereon.

The reflected-light level detecting means 51 detects the level of reflected-light while recording bits of information. The reflected-light means a light beam reflected from an information recording surface of the optical disk D as a result of irradiating the optical beam 9 onto the optical disk D. The level of reflected-light means level of detection signal obtained from the reflected-light by means of photoelectric transfer. Concretely, the level of reflected-light includes a pit level Lp, a write level Lw, a read level, a recording power and a pit ratio. The pit ratio is shown as a ratio of write level Lw, the recording power Pr or the read level Lr to the pit level Lp.

The correction amount deciding means 52 is configured to decide an amount of correction of the spherical aberration according to the level of reflected-light detected by the reflected-light level detecting means 51. When deciding the amount of correction of the spherical aberration, the correction amount deciding means 52 provides the amount of correction to the spherical aberration correcting means 53. The spherical aberration correcting means 53 is configured to perform a correction on the spherical aberration according to the provided amount of correction.

Under a recording operation performed by the recording means 50, the correction amount deciding means 52 changes a correction amount for spherical aberration little by little and the spherical aberration correcting means 53 carries out the spherical aberration every time the correction amount is changed. And the reflected-light level detecting means 51 detects (measures) the level of light that has been reflected, into which a last-time corrected result of the spherical aberration is reflected. Based on the reflected-light level that has been detected (measured), it is determined by the correction amount deciding means 52 whether or not an amount of the spherical aberration has decreased (i.e., the spherical aberration has been improved) thanks to the correction carried out last time using the current correction amount.

If it is determined that the amount of the spherical aberration has decreased, the spherical aberration is further deeply corrected in the same correcting direction as the last one to the spherical aberration (i.e., in the same polarity direction to the correction amount). As long as the same determination comes out, the correction in the same correcting direction is repeatedly carried out.

On the contrary, in cases where the determination that the amount of the spherical aberration has not decreased (i.e., the spherical aberration has not been amended) is made, the correction amount deciding means 52 turns the correcting direction to its opposite way (i.e., the opposite polarity direction to the correction amount), along which the spherical aberration is to be corrected repeatedly from now on.

Thus, the correction amount deciding means 52 is able to change the correction amount so that the spherical aberration decreases any time, with the result that the spherical aberration correcting means 53 engages in the correction using such appropriately decided correction amounts. Accordingly, even when fluctuations in the amount of spherical aberration occur due to various reasons, such as changes in the temperature, during the recording operation, such fluctuations are always tracked in real time and undergo the correction of the spherical aberration in a well controlled manner.

As the spherical aberration correcting means 53, already known various correcting elements, for example, a liquid crystal element, an optical element, or other similar elements may be used.

A second embodiment of applying the spherical aberration correcting unit to an information recording system will now be described with reference to the accompanying drawings.

[Structure of the information recording system]

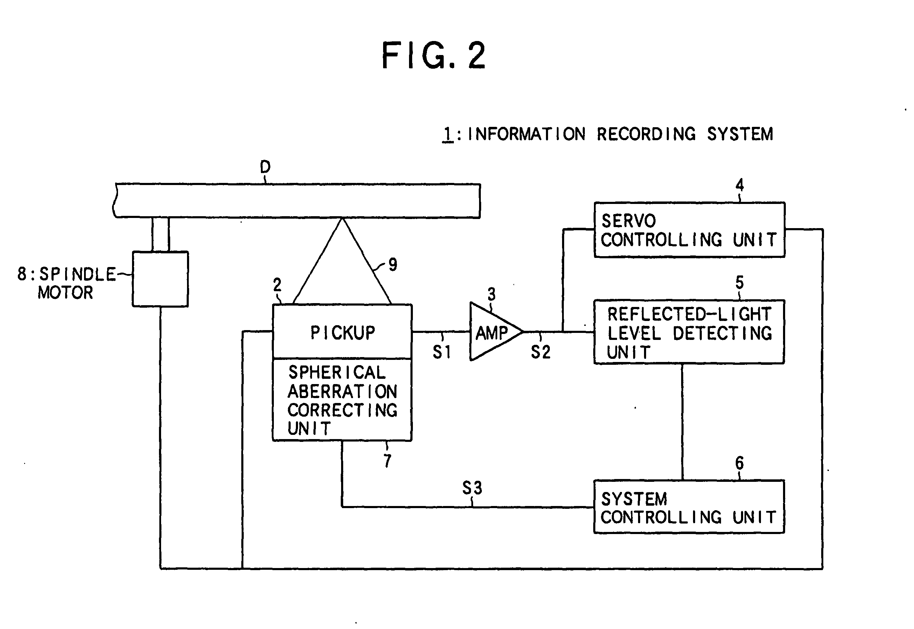

Fig. 2 shows a schematic configuration of the information recording system to which the spherical aberration correcting unit is applied.

In Fig. 2, the information recording system 1 is configured so that information can be recorded onto an optical disk D and information recorded on the optical dick D can be read to be reproduced.

The information recording system 1 comprises a pickup 2 having, for example, a laser diode as a light source and an optical system with an objective lens and the like, an amplifier 3, a servo control unit 4, a reflected-light level detecting unit 5, a system controlling unit 6, a spherical aberration correcting unit 7 and a spindle motor 8. Incidentally, in Fig. 2, the above elements 2 to 8 which are related to the spherical aberration correction of the present invention are mainly illustrated. In other words, a spherical aberration correcting system according to the present invention is made up of the pickup 2, amplifier 3, reflected-light level detecting unit 5, system controlling unit 6 and spherical aberration correcting unit 7.

As the optical disk D, various optical disks such as, for example, CD-R (Compact Disc-Recordable), DVD-R (Digital Versatile Disc-Recordable), DVD-RW (Digital Versatile Disc-Rewritable), DVD+R (DVD+Recordable) and DVD+RW (DVD+Rewritable), on which information can be recorded only at once, or information can be recorded a plurality of times can be used.

The spindle motor 8 is configured to rotate the optical disk D at a predetermined rotation rate, and control the rotation thereof.

The pick-up 2 is configured to irradiate an optical beam 9 onto the optical disk D, and receive a reflected-light from an information recording surface of the optical disk D to provide the reflected-light that functions as a detection signal S1, which is an electrical signal, to the amplifier 3.

The amplifier 3 is configured to amplify the detection signal S1 at a predetermined gain to supply a detection signal S2 which is amplified from the detection signal S1 to the servo controlling unit 4 and the reflected-light levels detecting unit 5, respectively.

The servo controlling unit 4 is configured to generate servo error signals such as a tracking error signal, a focus error signal and the like according to the supplied detection signal S2 through one of the already known various methods of generating the servo error signals.

The servo controlling unit 4 supplies the generated servo error signals to the pick-up 2 and the spindle motor 8, respectively. The supplied servo error signals from the servo controlling unit 4 is used to control the rotation number of the spindle motor 8, whereby the spindle servo control is performed.

The supplied servo error signals from the servo controlling unit 4 is used to control a position of the objective lens of the pick-up 2 and the like, whereby the various types of servo control, such as the focus servo and the tracking servo, are performed.

The reflected-light level detecting unit 5 detects the level of reflected-light according to the supplied detection signal S2 while an actual recording. The level of reflected-light include the pit level Lp, the write level Lw, and the read level.

The system controlling unit 6 comprises a microcomputer and the like and is configured to decide the optimum correction amount of spherical aberration according to the detected levels of the reflected-light to provide a control signal S3 corresponding to the correction amount of spherical aberration to the spherical aberration correcting unit 7.

The spherical aberration correcting unit 7 is configured to correct the spherical aberration caused in the optical beam 9 due to irregularities over the portions of the transparent layer of the optical disk D, or caused in the pick-up. That is, the spherical aberration correcting unit 7 is configured to correct the correction amount of the spherical aberration caused in the optical beam 9, the correction amount corresponding to the control signal S3.

As the spherical aberration correcting unit 7, already known various correcting units may be used.

For example, one of the correcting units comprises a plurality of liquid crystal regions concentrically arranged and placed on the optical beam path. That is, in such a correcting unit, controlling voltages applied to the liquid crystal regions causes changes in phase of the optical beam 9 transmitted through the liquid crystal regions, thereby correcting the spherical aberration of the optical beam 9. The correcting unit using the plurality of liquid crystal regions is referred to as "crystal liquid type" hereinafter.

Another correcting unit comprises an optical element such as a collimate lens placed in the optical beam path. That is, in such a unit, controlling the optical element causes a spherical aberration which has an inverted characteristic of the spherical aberration already caused in the optical beam 9, thereby canceling the spherical aberrations with each other. The correcting unit using such an optical element is referred to as "optical element type" hereinafter.

That is, various correcting units capable of correcting the spherical aberration caused in the optical beam 9 can be applied to the present invention.

In this regard, the control signal S3 supplied to the spherical aberration correcting unit 7 from the system controlling unit 6 depends on the type of the spherical aberration correcting unit 7. For example, when adopting the liquid crystal type of spherical aberration correcting unit, the control signal S3 is formed of a signal representing a voltage applied to each of the liquid crystal regions. Meanwhile, when adopting the optical element type of spherical aberration correcting unit, the control signal S3 is formed of a signal representing a distance of the optical element or the like.

[level of reflected-light]

As stated above, the level of reflected-light include the pit level Lp, the write level Lw, and the read level.

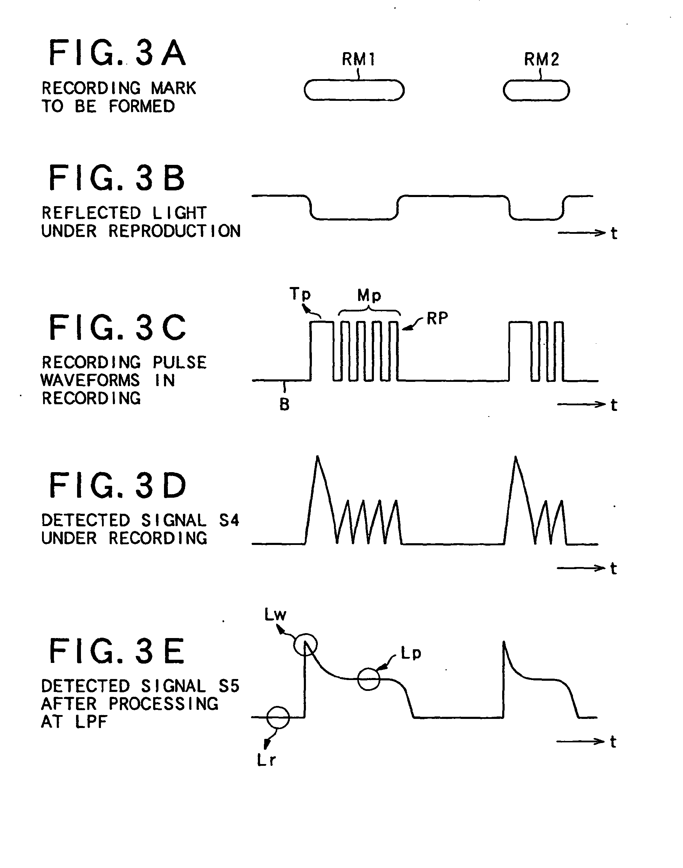

At first, a concept of the pit level is described. As shown in Fig. 3A, assuming that recording marks (pits) RM 1 and RM2 written on the recording area of the optical disk. In this case, when reproducing the optical disk, the level of reflected-light from the recording marks RM1 and RM2 are represented in Fig. 3B.

That is, the reflectivity of each of the portions of the recording area RM1, RM2 at which the recording marks are formed is low as compared with that of the portion of the recording area at which no recording marks are formed, so that the level of reflected-light beams from the portions of the recording areas RM1, RM2 are low as compared with the level of the reflected-light beam from the portion of the recording area at which no recording marks are formed.

On the other hand, it is assumed that a recording pulse RP for forming each of the recording marks RM1 and RM2 shown in Fig. 3A is composed of a top pulse Tp and multi pulses Mp that is successive thereto, and the waveform of each recording pulse RP is shown in Fig.3C. Incidentally, the characteristic reference B represents a bias level of each of the pulses Tp and Mp.

When the recording pulses each having the waveform shown in Fig. 3C drive the laser diode of the pickup, the signals S4 detected by the pickup 2 and the amplifier 3 on the basis of the reflected-light from each of the recording marks RM 1 and RM2 can be shown in Fig. 3D.

High frequency components in the signals S4 are eliminated through an LPF (low pass filter) so that signals S5 are obtained whose waveforms are shown in Fig. 3E.

In each of the signals S5, a level corresponding to the top pulse Tp of the recording pulse RP shown in Fig. 3C becomes a write level Lw, a level corresponding to the multi pulses Mp of the recording pulse RP shown in Fig. 3C becomes a pit level Lp, and a lever corresponding to the bias level B of the recording pulse RP shown in Fig. 3C becomes a read level Lr.

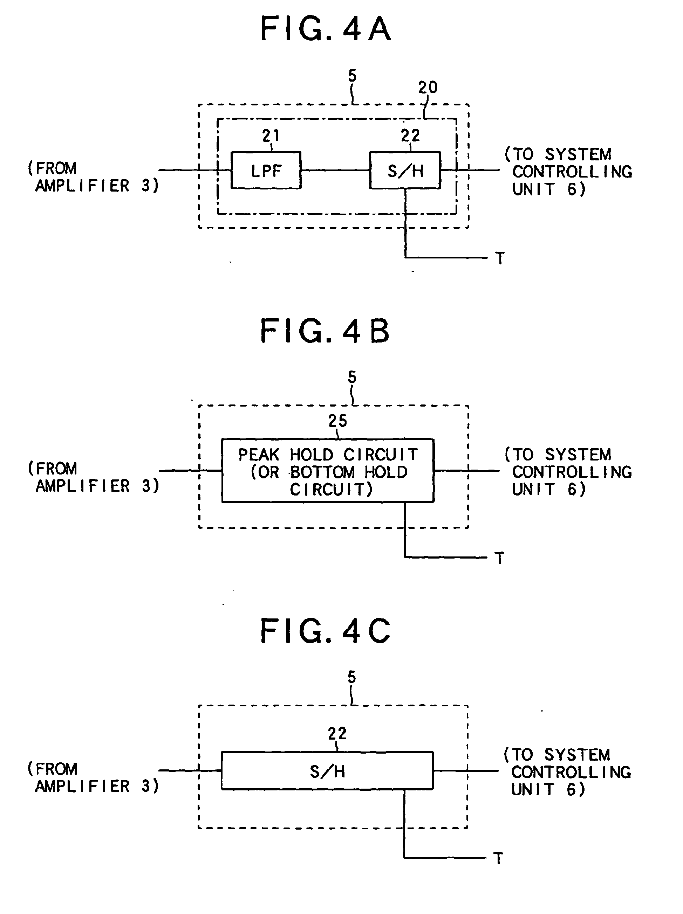

A circuit structure for obtaining the pit level Lp, the write level Lw, and the real level Lr is shown in Fig. 4A. This circuit 20 is installed on the reflected-light level detecting unit 5.

When using the recording pulse RP composed of the top pulse Tp and the multi pulses Mp shown in Fig. 3C, the detected signal S4 includes the pulse train so that it is impossible to detect levels such as the pit level and so on from the detected signal S4.

Then, as shown in Fig. 4A, the signal S4 transmitted from the amplifier 3 is inputted to the LPF 21 of the circuit 20 so that only low frequency components are extracted from the signal S4, thereby obtaining the signal S5 shown in Fig. 3E.

The signal S5 is inputted to a sample/hold (S/H) unit 22 of the circuit 20. The S/H unit 22 samples and holds each of the pit level Lp, the write level Lw, and the read level Lr at each predetermined timing decided by each timing signal T inputted to the S/H unit 22. Each timing of each timing signal T depends on each level Lp, Lw and Lr.

For example, when sampling and holding the write level Lw, the timing signal T is set to represent the timing corresponding to the top pulse Tp. When sampling and holding the pit level Lp, the timing signal T is set to represent the timing corresponding to the substantially center portion of the multi-pulse period representing a period between a beginning multi pulse Mp to an end multi pulse Mp.

The pit level Lp represents a level of the reflected-light obtained while forming the pit (recording mark) by the recording pulse RP so that it provides an indication of representing how accurately the pit (recording mark) is formed.

That is, when the pit is accurately formed according to the recording pulse, the reflectivity of the formed portion is made low, causing the pit level Lp to be low sufficiently. On the other hand, when the pit is not accurately formed, the reflectivity of the portion of the recording area at which the pit is supposed to be formed keeps high, causing the pit level Lp to be high.

Next, a concept of the pit ratio is described.

The pit ratio is shown as a ratio of write level Lw, the recording power Pr or the read level Lr to the pit level Lp.

That is, the pit level is represented by one of the expressions (1) to (3) hereinafter.

$$\text{Pit ratio} = (Lw-Lp)/Lw \qquad \cdots (1)$$

$$\text{Pit ratio} = (Pr) / Lp \qquad \cdots (2)$$

$$\text{Pit ratio} = Lr / Lp \qquad \cdots (3)$$

These expressions show that, when the pit is accurately formed while recording the pit, the pit level Lp is made low, causing the pit ratio to be increased.

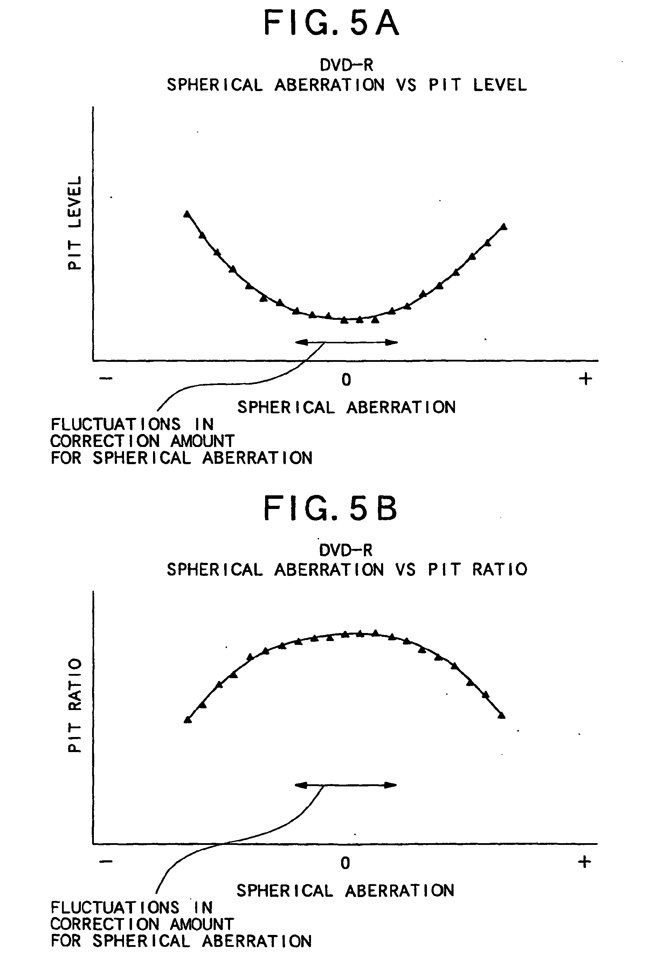

Next, a correlation between the spherical aberration and the pit level Lp is described. Fig. 5A shows a correlation between the spherical aberration and the pit level Lp in the case of using the DVD-R as the optical disk. In Fig. 5A, a horizontal axis represents an amount of spherical aberration and a vertical axis represents the pit level Lp.

As shown in Fig. 5A, when the pit is accurately formed, the lower the pit level is, the more decreased the spherical aberration is. A position at which the pit level Lp is minimized and that at which the spherical aberration is approximately minimized coincide with each other.

Thus, measuring the pit level Lp as the recording characteristic while recording the pit and deciding the spherical aberration so as to minimize the pit level allow the amount of spherical aberration to be minimized.

Next, a correlation between the pit ratio and the spherical aberration is described. Fig. 5B shows a correlation between the pit ratio and the spherical aberration.

As shown in Fig. 5B, the lower the pit level Lp is and the higher the pit ration is, the more increased the spherical aberration. Both of a position at which the pit ratio is maximized and at a position at which the spherical aberration is approximately minimized coincide with each other.

Thus, detecting the pit level LP, the write level Lw or the read level Lr to obtain the pit ratio and deciding the spherical aberration so as to maximize the pit ratio allow the amount of spherical aberration to be minimized.

Incidentally, the circuit 20 which is an example for obtaining the pit level Lp, the write level Lw and the read level Lr is shown in Fig. 4A. In place of the circuit 20, as shown in Fig. 4B, a peak hold circuit (or a bottom hold circuit) 25 may be installed in the reflected-light levels detecting unit 5. When using the peak hold circuit (or a bottom hold circuit) 25, the LPF 21 is made redundant, which should be omitted.

As shown in Fig. 3E, when the detected signal S5 has the positive polarization, the peak hold circuit may be used, and when the detected signal S5 has the negative polarization, the bottom hold circuit may be used. That is, the peak hold circuit (bottom hold circuit) 25 may hold each of the pit level Lp, the write level Lw, and the read level Lr at each predetermined timing decided by each timing signal T inputted to the peak hold circuit (bottom hold circuit) 25.

When using a non-multi type of recording pulse in place of the recording pulse RP shown in Fig. 3C, only the sample/hold circuit 22 may be used so that the LPF 21 is made redundant, shown in Fig. 4C. The waveform of the non-multi type of recording pulse has no multi pulses Mp so that the high frequency components shown in Fig. 3D are low in the detected signal, whereby sampling and holding the levels of the detected signal allow each level Lp, Lw, Lr to be obtained.

[Correlation between the spherical aberration and the recording characteristic]

Next, a correlation between the spherical aberration and each recording characteristic obtained by the actual recording will now be described.

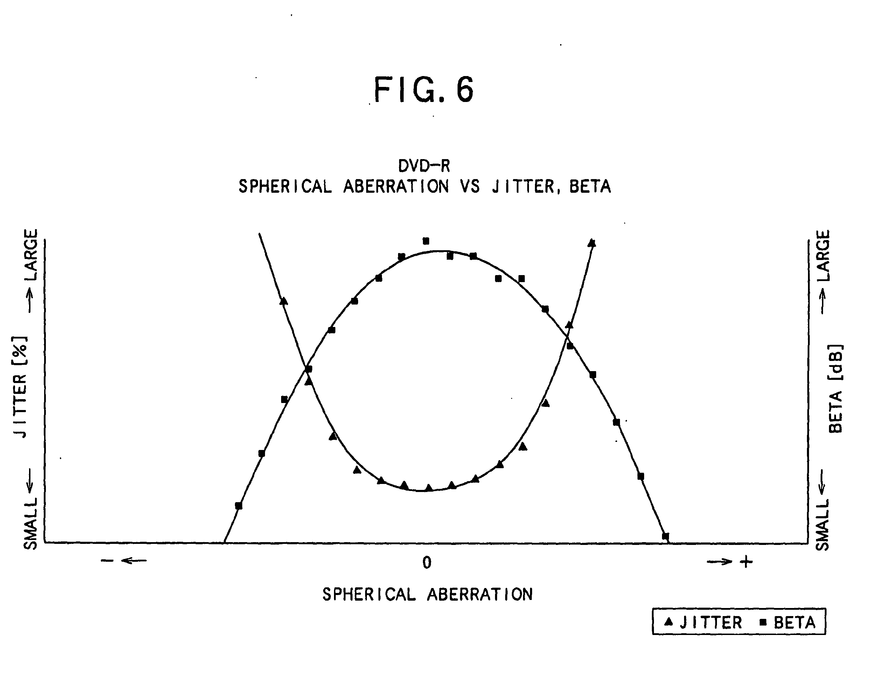

Fig. 6 illustrates a correlation between the spherical aberration and the jitter, and a correlation between the spherical aberration and the β (beta) value in the case of using the DVD-R as the optical disk. In Fig. 3, a horizontal axis represents an amount of spherical aberration, a vertical axis represents the jitter [%] and the β value [dB], and a center of the horizontal axis represents that the spherical aberration becomes zero.

As understood from Fig. 3, a position at which the jitter is minimized and that at which the spherical aberration is approximately minimized, that is, approximately becomes zero, substantially coincide with each other. That is, the correlation between the jitter and the spherical aberration shows that the jitter increases with increasing spherical aberration.

Thus measuring the jitter as the recording characteristic and controlling the spherical aberration correcting unit 7 so as to minimize the amount of spherical aberration allow the jitter to be minimized.

In addition, as understood from Fig. 3, a position at which the β (beta) value is maximized and that at which the spherical aberration is approximately minimized substantially coincides with each other.

Thus recording so as to minimize the amount of spherical aberration allows the β value to be maximized and to form good pits accurately.

Next, a correlation between the spherical aberration and the recording power Pr will be described hereinafter.

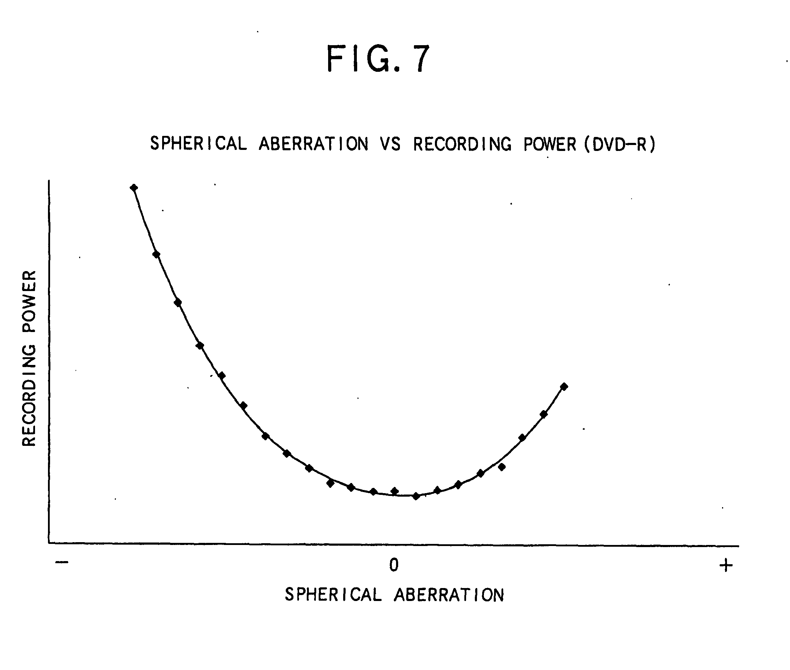

Fig. 7 shows a correlation between the spherical aberration and a recording power required for forming a pit from which a constant β value, constant modulation or a constant asymmetry are obtained, that is, a pit fulfills a constant standard.

As understood in Fig. 7, when the spherical aberration is minimized, the recording power is minimized. That is, minimizing the spherical aberration allows the usability of the recording power to be maximized, whereby it is turned out that, even when using weak recording power, good pits can be formed.

[Deciding process of correction amount of spherical aberration]

Next, a deciding process of correction amount of spherical aberration will be described hereinafter. Incidentally, the reflected-light level detecting unit 5 and the system controlling unit 6 mainly perform the deciding process. As the deciding process of correction amount of spherical aberration, two processes can be applied, sequentially described hereinafter.

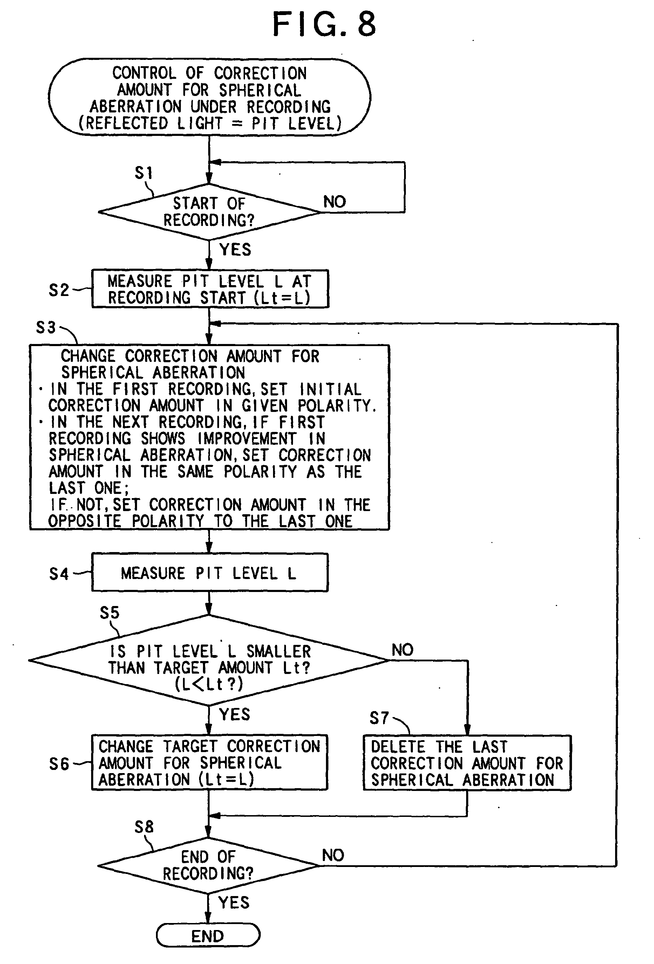

As shown in Fig. 8, the system controlling unit 6 first determines whether a recording operation has been started or not (step S1 in Fig.8). For example, in cases where the information recording system 1 is loaded by a user with an optical disk to be desired for recording and the system controlling unit 6 detects a command for recording, it is recognized that the recording operation should start.

The reflected-light level detecting unit 5 operates to detect (measure) the level of reflected-light (i.e., a pit level) under the recording operation, and then designates the detected level as a target amount Lt (step S2).

Then the system controlling unit 6 calculates a correction amount for spherical aberration (step S3). In the case that this calculation is the first time after starting the recording operation, the system controlling unit 6 sets this calculated correction amount as its initial value. This initial value has either a positive or negative correcting polarity determined by the predetermined curve shown in Fig. 5A. The reflected-light level detecting unit 5 then detects the level L of reflected-light (step S4). The retuned-light level L detected at this time has been subjected to the spherical aberration correction carried out according to the correction amount for spherical aberration calculated at step S3.

The system controlling unit 6 then determines whether or not the reflected-light level L detected (measured) at step S4 become smaller the target value Lt set at step S2, that is, an amount of the spherical aberration has been reduced (improved) than the last spherical aberration correction (step S5).

As shown in Fig. 5A, it can be comprehended that, when the reflected-light level (i.e., pit level) has been reduced, the spherical aberration becomes smaller. In such a case, the correcting polarity direction in which the correction amount has been changed currently is correct, so that such changes should be kept on going in this current correcting polarity direction. Therefore, the system controlling unit 6 gives the target value Lt an amount of the reflected-light level L detected this time (i.e., Lt=L; step S6).

In contrast, when it is determined at step S5 that the reflected-light level L has not decreased, it can be assumed that the spherical aberration has not been directed to its reduced (improved) state. Namely, the correcting polarity direction in which the correction amount has currently been changed is not correct. Based on this determination, the system controlling unit 6 deletes the current correction amount that was set last time (step S7), so that the correction amount is forcibly returned to an amount that had been used before the last time. Hence, the current correction amount is regarded as being improper, because it caused a swell in the spherical aberration carried out under the current spherical aberration correction amount.

Then the system controlling unit 6 determines if the recording has been continued or not (step S8), and if continued, the processing is returned to step S3 to again determine an updated aberration amount for spherical aberration. That is, when the processing carried out last time at step S5 revealed that the level of the reflected-light was reduced (that is, the spherical aberration is lessened), the spherical aberration correction amount is changed in the same correcting polarity direction (for example, the positive correcting direction) as that in the last time.

On the contrary, when the processing carried out last time at step S5 showed that the level of the reflected-light had not been lessened (that is, the spherical aberration had not been improved), the correction amount will be changed this time to the opposite plurality direction (i.e., the negative correcting direction) to that in the last time.

And the level L of the reflected-light generated after the spherical aberration correction on the updated correction amount is detected again at step S4, and is subjected to the comparison with the reflected-light-level target value Lt that is currently set. In this way, as the correction amount for spherical aberration is changed little by little, the determination whether or not the spherical aberration has been improved is repeatedly carried out using the reflected-light produced after its aberration correction.

It is therefore possible that, whenever the spherical aberration fluctuates under the recording operation due to some factors including changes in temperature, pieces of information can be recorded with the spherical aberration corrected always to track the fluctuations in a controlled proper manner.

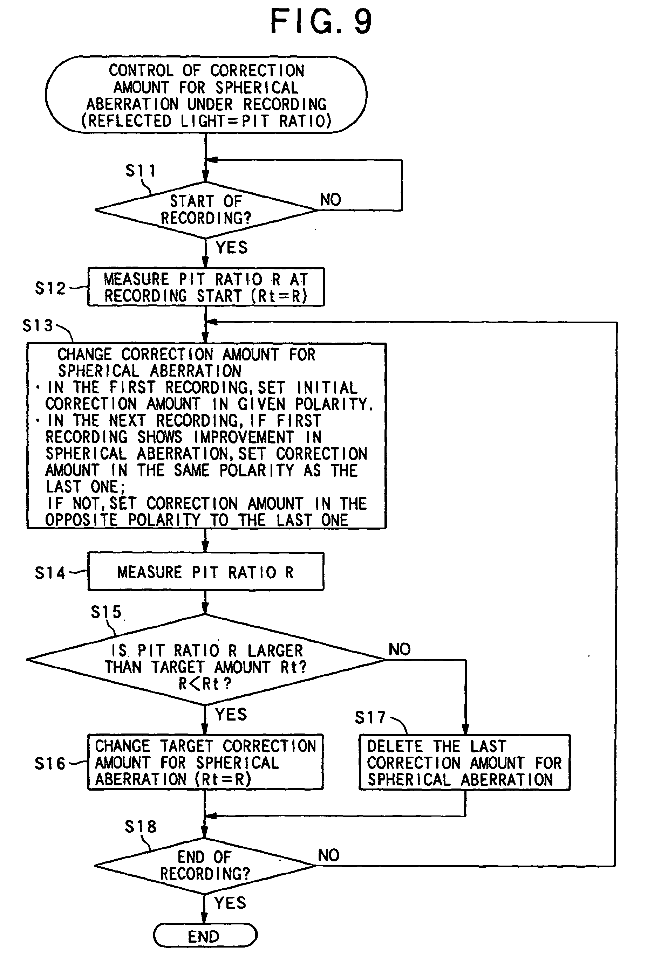

Since the example provided by the flowchart of Fig. 8 uses the pit level serving as the reflected-light level, the spherical aberration is regarded as being improved if the determination that the reflected-light level becomes smaller than its target value can be made at step S5. Alternatively, as a physical amount showing levels of the reflected-light, a pit ratio can be used instead of the pit level on the similar processing to the above. The processing carried out using the pit ratio can be explained with the flowchart shown in Fig. 9.

Practically, after detecting the start of recording pieces of information, the system controlling unit 6 calculates a pit ratio R at the timing of the recording start using both of a pit level detected by the reflected-light level detecting unit 5 and either a read level or a write level, and then designates the calculated pit level R as a target value Rt (step S12). The system controlling unit 6 further proceeds to step S13, where a correction amount for the spherical aberration is changed every time the correction amount is changed in the same manner as that described at step S3 in Fig.8.

The system controlling unit 6 detects, a signal serving as the reflected-light level, any one of a read level, a write level, and a recording level as well as a pit level, so that a pit ratio R generated after each time of correction of the spherical aberration is calculated (measured) (step S14). It is then determined if the calculated pit ratio R at step S15 is over the target value Rt for pit ratio designated at step S2 (step S15). As shown in Fig. 15B, the larger the pit ratio R, the less the spherical aberration.

Hence, when it is found that the pit ratio R becomes larger than the target value Rt currently set, it can be recognized by the system controlling unit 6 that the spherical aberration has been improved more than the last, thus the processing being made to go to step S16. On the contrary, it is determined that the pit ratio R is still below the target value Rt currently set, the opposite recognition to the above is made, so the processing proceeds to step S17. The processing carried out at steps S16 and 17 resembles that carried out at steps S6 and S7 in Fig. 8.

The above-said processing at steps S13 to S17 will be repeatedly carried out until the end of the recording basically in the same manner as that in Fig. 8 where the pit level is used a signal indicting the reflected-level (step S18).

[Examples of spherical aberration correcting unit]

As described above, in this second embodiment, any spherical aberration correcting unit 7 having any systems and structures may be used. Examples of the spherical aberration correcting units are explained.

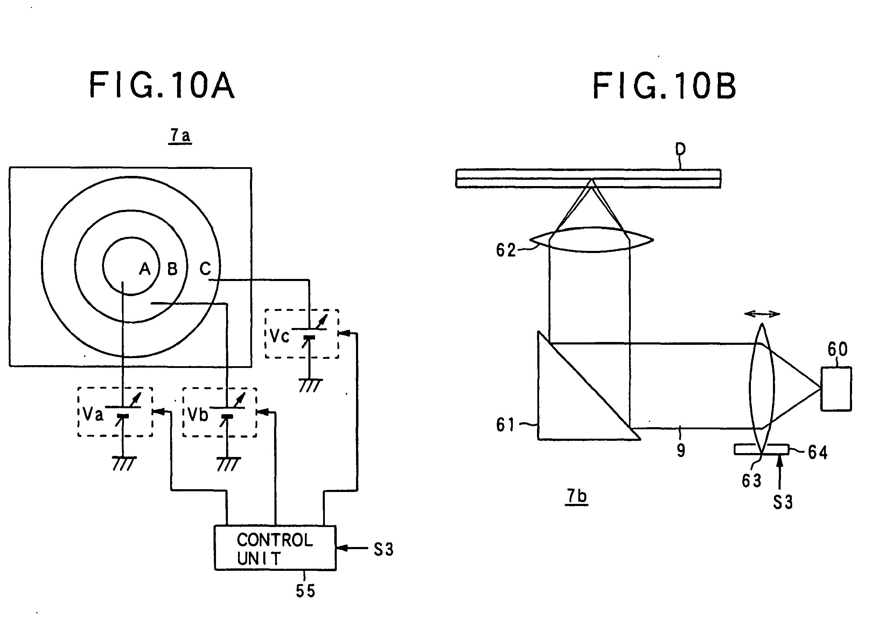

Fig. 10A typically illustrates the structure of a liquid crystal type of spherical aberration correcting unit 7a described above. The spherical aberration correcting unit 7a is arranged to be inserted between the laser diode as the light source and placed on the optical beam path.

That is, the spherical aberration correcting unit 7a comprises a plurality of liquid crystal regions A, B and C concentrically arranged and placed in the optical beam path, variable voltages Va, Vb and Vc applied to the liquid crystal regions A, B and C and a control unit 55 connected to the variable voltages Va, Vb and Vc and to the system control unit 7.

That is, the control unit 55 of the spherical aberration correcting unit 7a is configured to control, according to the control signal S3 from the system controlling unit 7, the variable voltages Va, Vb and Vc applied to the liquid crystal regions A, B and C, respectively, so as to cause changes in the phase of the optical beam 9 transmitted through the liquid crystal regions A, B and C, thereby correcting the spherical aberration of the optical beam 9. This type of spherical aberration correcting unit is disclosed in Japanese Patent Laid-open (KOKAI) Publications No. HEI10-269611 and No. 2002-15454, for instance.

Fig. 10B schematically illustrates the structure of a optical element type of spherical aberration correcting unit 7b described above.

The spherical aberration correcting unit 7b has a collimate lens 63 placed in the optical beam path between a laser diode 60 and a mirror 61, and an actuator 64 configured to movably support the collimate lens 63 along the direction of the optical beam path.

That is, the optical beam irradiated from a light source 60 is inputted to a collimate lens 62 to be converted into a collimate beam so that the collimated optical beam 9 is reflected by the mirror toward the optical disk D (the objective lens 62). The reflected optical beam 9 is inputted to the objective lens 62 to be focused onto the optical disk D.

In cases where an error of thickness or the like causes a first spherical aberration in the reflected-light from the optical disk D, the actuator 64 controls the collimate lens 63 to move along the optical beam path shown by an arrow in Fig. 10B, whereby making occur a second spherical aberration which has an inverted characteristic of the first spherical aberration already caused in the optical beam 9. That is, the actuator 64 makes the collimate lens 64 move at the position at which the second spherical aberration occurs in the optical beam 9, thereby canceling the first spherical aberration in the reflected-light and the second spherical aberrations in the optical beam 9 on the whole.

This type of spherical aberration correcting unit is disclosed in Japanese Patent Publication Laid-open (KOKAI) No. 2001-236674, for example.

As explained above, the spherical aberration correcting unit 7 according to the present embodiment is capable of detecting a level of light which has been reflected from an optical disk, onto which an optical beam for recording pieces of information is radiated, of deciding a correction amount for spherical aberration on the basis of the reflected-light level, and of correcting the spherical aberration using the decided correction amount. In consequence, whenever fluctuations in the amount of the spherical aberration occur on account of various factors such as changes in temperature under the recording operation, the spherical aberration can be corrected appropriately so as to cancel such fluctuations changing in real time.

In addition, as understood in Fig. 7, recording bits of information at the optimum amount of spherical aberration amount, that is, the minimum of the spherical aberration amount allows the recording power to be effectively used, making it possible to form precise pits even in the case of using a weaker amount of recording power.

Thus, when a ROPC(Running Optimum Power Control) is performed during the recording, it is possible to decrease the correction amount of the recording power by the ROPC.

In the feature, the more accelerated the rate of recording is, the more increased the recording power required for accurately forming pits is. However, in the second embodiment, performing the recording of information in the optimum spherical aberration permits the recording power to decrease, thus a margin with respect to the maximum power of the laser diode controlling the generation of optical beam being increased. In addition, it is possible to prevent the temperature of the laser diode or the entire information recording system during the recording from increasing.

## Claims

1. A spherical aberration correcting system comprising:

   a recording unit (50) configured to record a piece of information through radiation of an optical beam onto an optical disk;

   a reflected-light level detecting unit (51) configured to detect a level of light formed of the optical beam reflected from the optical disk under a recording operation for the information;

   a correction amount deciding unit (52) configured to decide a correction amount for spherical aberration on the basis of the level of the reflected light; and

   a spherical aberration correcting unit (7; 53) configured to correct the spherical aberration by using the correction amount,

   **characterized in that** the correction amount deciding unit comprises:

   a determining element (52,6) configured to determine whether or not the spherical aberration obtained after the aberration correction has been improved, by mutually comparing both levels of the reflected light obtained before and after the aberration correction carried out by the spherical aberration correcting unit;

   a first processing element (52,6) configured to update the correction amount by changing the correction amount in a direction of either the same positive or negative polarity as the polarity used for deciding the correction amount currently set, the spherical aberration being subject to changes in the direction of either the positive or negative polarity, in cases where it is determined by the determining unit that the amount of spherical aberration has been improved; and

   a second processing element (52,6) configured to delete the correction amount currently set and setting the correction amount to an amount used before updating said correction amount, in cases where it is determined by the determining element that the level of the reflected light obtained after the aberration correction carried out becomes smaller than a target value.

2. The spherical aberration correcting system according to claim 1, wherein the correction amount deciding unit (52) further comprises

   a third processing element (52,6) configured to update the correction amount by changing the correction amount in a direction of either the positive or negative polarity that is opposite to the polarity used for deciding the correction amount currently set in cases where it is determined by the determining unit that the amount of spherical aberration has not to be improved.

3. The spherical aberration correcting system according to claim 1or 2, wherein the reflected-light level detecting unit (51) is configured to output a pit level of the optical beam under the recording operation as a signal indicative of the level of the reflected light.

4. The spherical aberration correcting system according to claim 1 or 2, wherein the reflected-light level detecting unit (51) comprises:

   a detecting element (5) configured to detect a pit level of the optical beam under the recording operation and at least one of a read level and a write level; and
   a calculation element (20) configured to calculate a pit ratio indicating a ratio between the pit level and one of the read level, the write level, and a recording power and to output the pit ratio as a signal indicative of the level of the reflected light.

5. The spherical aberration correcting system according to one of claims 1, 2, 3 or 4, further comprising
   a controlling unit (6) configured to enable the reflected-light level detecting unit (51), the correction amount deciding unit (52), and the spherical aberration correcting unit (53) to perform the correction for the spherical aberration in response to a start of the recording operation.

6. A spherical aberration correcting method comprising the steps of:

   recording a piece of information through radiation of an optical beam onto an optical disk;
   detecting a level of light formed of the optical beam reflected from the optical disk under a recording operation for the information;
   deciding a correction amount for spherical aberration on the basis of the level of the reflected light; and
   correcting the spherical aberration by using the correction amount,
   wherein the recording step is continued until the recording operation for the information is instructed to stop, during which time the light level detecting step, the correction amount deciding amount, and the spherical aberration correcting step are repeatedly performed in sequence,
   **characterized in that** the step of deciding a correction amount comprises the steps of:

   determining whether or not the spherical aberration obtained after the aberration correction has been improved, by mutually comparing both levels of the reflected light obtained before and after the aberration correction carried out;
   updating the correction amount by changing the correction amount in a direction of either the same positive or negative polarity as the polarity used last time for deciding the correction amount currently set, the spherical aberration being subject to changes in the direction of either the positive or negative polarity, in cases where it is determined by the determining unit that the amount of spherical aberration has been improved; and
   deleting the correction amount currently set and setting the correction amount to an amount used before updating said correction amount, in cases where it is determined by the determining element that the level of the reflected light obtained after the aberration correction carried out becomes smaller than a target value.


**Patentansprüche**

1. System zur Korrektur von sphärischer Aberration, welches aufweist:

   eine Aufzeichnungseinheit (50), welche konfiguriert ist, um einen Teil einer Information durch Bestrahlen einer optischen Scheibe mit einem optischen Strahl aufzuzeichnen;

eine Pegeldetektiereinheit (51) für reflektiertes Licht, welche so konfiguriert ist, dass sie einen Pegel des Lichtes, das durch den optischen Strahl, welcher von der optischen Scheibe reflektiert wird, während einer Aufzeichnungsoperation der Information detektiert;

eine Entscheidungseinheit (52) über einen Korrekturbetrag, welche so konfiguriert ist, dass sie über einen Korrekturbetrag für sphärische Aberration auf der Grundlage des Pegels des reflektierten Lichts entscheidet; und eine Korrektureinheit (7; 53) für sphärische Aberration, welche so konfiguriert ist, dass sie die sphärische Aberration durch Benutzen des Korrekturbetrages korrigiert, **dadurch gekennzeichnet, dass** die Entscheidungseinheit für den Korrekturbetrag aufweist:

ein Bestimmungselement (52, 6), welches so konfiguriert ist, dass es bestimmt, ob die nach der Aberrationskorrektur erhaltene sphärische Aberration verbessert wurde oder nicht, indem gegenseitig die beiden Pegel des reflektierten Lichtes verglichen werden, welche vor und nach der Aberrationskorrektur, welche durch die Korrektureinheit der sphärischen Aberration durchgeführt wurde, erhalten wurden;

ein erstes Verarbeitungselement (52, 6), welches so konfiguriert ist, dass es den Korrekturbetrag durch Verändern des Korrekturbetrags in einer Richtung mit entweder der gleichen positiven oder der negativen Polarität wie die Polarität, welche für die Entscheidung des aktuell eingestellten Korrekturbetrags benutzt wurde, aktualisiert, wobei die sphärische Aberration Änderungen in Richtung entweder der positiven oder der negativen Polarität unterliegt, in Fällen, wo durch die Bestimmungseinheit bestimmt ist, dass der Betrag an sphärischer Aberration verbessert wurde; und

ein zweites Verarbeitungselement (52, 6), welches so konfiguriert ist, dass es den Korrekturbetrag, welcher aktuell eingestellt ist, löscht und den Korrekturbetrag auf einen Betrag einstellt, welcher vor dem Aktualisieren des Korrekturbetrages benutzt wurde, in Fällen, in welchen das Bestimmungs- bzw. Entscheidungselement bestimmt, dass der Pegel des reflektierten Lichtes, welches nach der ausgeführten Aberrationskorrektur erhalten wurde, kleiner als ein Sollwert wird.

2.  System zur Korrektur von sphärischer Aberration nach Anspruch 1, in welchem die Entscheidungseinheit (52) über den Korrekturbetrag ferner aufweist:

ein drittes Verarbeitungselement (52, 6), welches so konfiguriert ist, dass es den Korrekturbetrag durch Verändern des Korrekturbetrags in einer Richtung entweder der positiven oder der negativen Polarität, welche umgekehrt zu der Polarität ist, welche für das Entscheiden des aktuell eingestellten Korrekturbetrages in Fällen benutzt wird, in welchem die Bestimmungseinheit bestimmt, dass der Betrag an sphärischer Aberration nicht verbessert werden muss.

3.  System zur Korrektur von sphärischer Aberration nach Anspruch 1 oder 2, in welchem die Detektiereinheit (51) für den reflektierten Lichtpegel so konfiguriert ist, dass sie einen Pit- bzw. Einbrenngrubenpegel des optischen Strahls während der Aufzeichnungsoperation als ein Signal ausgibt, welches für den Pegel des reflektierten Lichtes indikativ ist.

4.  System zur Korrektur von sphärischer Aberration nach Anspruch 1 oder 2, in welchem die Detektiereinheit (51) für den reflektierten Lichtpegel aufweist:

ein Detektierelement (5), welches so konfiguriert ist, dass es einen Pit-Pegel des optischen Lichtstrahls während der Aufzeichnungsoperation und wenigstens einen Lesepegel oder einen Schreibpegel detektiert; und ein Berechnungselement (20), welches so konfiguriert ist, dass es ein Pit-Verhältnis berechnet, welches ein Verhältnis zwischen dem Pit-Pegel und entweder dem Lesepegel, oder dem Schreibpegel oder einer Aufzeichnungsleistung anzeigt und das Pit-Verhältnis als ein Signal ausgibt, welches für den Pegel des reflektierten Lichtes indikativ ist.

5.  System zur Korrektur von sphärischer Aberration entsprechend einem der Ansprüche 1, 2, 3 oder 4, welches ferner aufweist:

eine Steuereinheit (6), welche so konfiguriert ist, dass sie die Detektiereinheit (51) für den reflektierten Lichtpegel, die Entscheidungseinheit (52) für den Korrekturbetrag und die Korrektureinheit (53) für die sphärische Aberration freigibt, um die Korrektur an der sphärischen Aberration in Antwort auf einen Beginn der Aufzeichnungsoperation freizugeben.

6.  Verfahren zur Korrektur sphärischer Aberration, welches die Schritte aufweist:

Aufzeichnen einer Information über das Bestrahlen einer optischen Scheibe mit einem optischen Strahl;

Detektieren eines Lichtpegels, welcher durch den optischen Strahl gebildet ist, welcher von der optischen Scheibe während einer Aufzeichnungsoperation der Information reflektiert wird;

Entscheiden über einen Korrekturbetrag für sphärische Aberration auf der Basis des Pegels des reflektierten Lichtes; und

Korrigieren der sphärischen Aberration durch Nutzen des Korrekturbetrages,

wobei der Aufzeichnungsschritt fortgeführt wird, bis die Aufzeichnungsoperation für die Information instruiert wird, anzuhalten, wobei während dieser Zeit der Lichtpegel-Detektierschritt, der Entscheidungsschritt über den Korrekturbetrag und der Korrekturschritt für die sphärische Aberration wiederholt in Folge durchgeführt werden, **dadurch gekennzeichnet, dass** der Schritt des Entscheidens über einen Korrekturbetrag die Schritte aufweist von:

Bestimmen, ob die nach der Aberrationskorrektur erhaltene sphärische Aberration verbessert wurde oder nicht, indem die beiden Pegel des reflektierten Lichtes, welche vor und nach der ausgeführten Aberrationskorrektur erhalten wurden, gegenseitig verglichen werden;

Aktualisieren des Korrekturbetrages durch Verändern des Korrekturbetrages in einer Richtung entweder der gleichen positiven oder negativen Polarität wie der zuletzt benutzten Polarität, um über den aktuell eingestellten Korrekturbetrag zu entscheiden, wobei die sphärische Aberration Änderungen in der Richtung entweder der positiven oder der negativen Polarität unterliegt, in Fällen, wo durch die Bestimmungseinheit bestimmt ist, dass der Betrag an sphärischer Aberration verbessert wurde; und Löschen des aktuell eingestellten Korrekturbetrags und

Einstellen des Korrekturbetrags auf einen Betrag, welcher zuvor zum Aktualisieren des Korrekturbetrages benutzt wurde, in Fällen, wo durch das Bestimmungselement bestimmt ist, dass der Pegel des reflektierten Lichtes, welcher nach der ausgeführten Aberrationskorrektur erhalten wurde, kleiner als ein Zielwert wird.

## Revendications

1. Système de correction d'aberration sphérique comprenant :

une unité d'enregistrement (50) configurée pour enregistrer un élément d'information par rayonnement d'un faisceau optique sur un disque optique ;

une unité de détection de niveau de lumière réfléchie (52) configurée pour détecter un niveau de lumière constituée du faisceau optique réfléchi par le disque optique lors d'une opération d'enregistrement de l'information ;

une unité de décision de quantité de correction (25) configurée pour décider d'une quantité de correction destinée à l'aberration sphérique sur la base du niveau de la lumière réfléchie ; et

une unité de correction d'aberration sphérique (7 ; 53) configurée pour corriger l'aberration sphérique en utilisant la quantité de correction,

**caractérisé en ce que** l'unité de décision de quantité de correction comprend :

un élément de détermination (52, 6) configuré pour déterminer si oui ou non l'aberration sphérique obtenue après correction d'aberration a été améliorée, en comparant mutuellement les deux niveaux de la lumière réfléchie obtenue avant et après la correction d'aberration effectuée par l'unité de correction d'aberration sphérique ;

un premier élément de traitement (52, 6) configuré pour mettre à jour la quantité de correction en changeant la quantité de correction dans le sens de la même polarité positive ou négative que la polarité utilisée pour décider de la quantité de correction définie actuellement, l'aberration sphérique étant soumise à des changements dans la direction de la polarité positive ou de la polarité négative dans des cas où il est déterminé par l'unité de détermination que la quantité d'aberration sphérique a été améliorée ; et

un deuxième élément de traitement (52, 6) configuré pour effacer la quantité de correction définie actuellement et définir la quantité de correction à une quantité utilisée avant de mettre à jour ladite quantité de correction, dans des cas où il est déterminé par l'élément de détermination que le niveau de lumière réfléchie obtenu après la correction de l'aberration effectuée devient inférieur à une valeur cible.

2. Système de correction d'aberration sphérique selon la revendication 1, dans lequel l'unité de décision de quantité de correction (52) comprend en outre

un troisième élément de traitement (52, 6) configuré pour mettre à jour la quantité de correction en changeant la quantité de correction dans une direction de polarité positive ou négative qui est opposée à la polarité utilisée pour décider de la quantité de correction définie actuellement dans des cas où il est déterminé par l'unité de détermination que la quantité d'aberration sphérique n'a pas à être améliorée.

3. Système de correction d'aberration sphérique selon la revendication 1 ou 2, dans lequel l'unité de détection de niveau de lumière réfléchie (51) est configurée pour délivrer un niveau de dépression du faisceau optique lors de l'opération d'enregistrement comme un signal indicateur du niveau de la lumière réfléchie.

4. Système de correction d'aberration sphérique selon la revendication 1 ou 2, dans lequel l'unité de détection de niveau de lumière réfléchie (51) comprend
un élément de détection (5) configuré pour détecter un niveau de dépression du faisceau optique lors de l'opération d'enregistrement et au moins un d'un niveau de lecture et d'un niveau d'écriture ; et
un élément de calcul (20) configuré pour calculer un rapport de dépression indiquant un rapport entre le niveau de dépression et l'un d'un niveau de lecture, d'un niveau d'écriture, et d'une énergie d'enregistrement, et pour délivrer le rapport de dépression comme un signal indicateur du niveau de la lumière réfléchie.

5. Système de correction d'aberration sphérique selon l'une des revendications 1, 2, 3 ou 4, comprenant en outre une unité de contrôle (6) configurée pour permettre à l'unité de détection de niveau de lumière réfléchie (51), à l'unité de décision de quantité de correction (52), et à l'unité de correction d'aberration sphérique (53) d'effectuer la correction de l'aberration sphérique en réponse à un lancement de l'opération d'enregistrement.

6. Procédé de correction d'aberration sphérique comprenant les étapes consistant à:

enregistrer un élément d'information par rayonnement d'un faisceau optique sur un disque optique ;
détecter un niveau de lumière constituée du faisceau optique réfléchi par le disque optique lors d'une opération enregistrement de l'information ;
décider d'une quantité de correction de l'aberration sphérique sur la base du niveau de la lumière réfléchie ; et
corriger l'aberration sphérique en utilisant la quantité de correction ;
dans lequel l'étape d'enregistrement est poursuivie jusqu'à ce que l'opération d'enregistrement de l'information soit arrêtée, durant ce temps l'étape de détection de niveau de lumière, l'étape de décision de quantité de correction et l'étape de correction de l'aberration sphérique sont effectuées de façon répétée en séquence ;
**caractérisé en ce que** l'étape consistant à décider d'une quantité de correction comprend les étapes consistant à :

déterminer si oui ou non l'aberration sphérique obtenue après la correction de l'aberration a été améliorée, en comparant mutuellement les deux niveaux de la lumière réfléchie obtenue avant et après la correction de l'aberration effectuée ;
mettre à jour la quantité de correction en changeant la quantité de correction dans la direction de la même polarité positive ou négative que la polarité utilisée la dernière fois pour décider de la quantité de correction définie actuellement, l'aberration sphérique étant soumise à des changements dans la direction de la polarité positive ou négative, dans des cas où il est déterminé par l'unité de détermination que la quantité d'aberration sphérique a été améliorée ; et
effacer la quantité de correction définie actuellement et définir la quantité de correction à une quantité utilisée avant de mettre à jour ladite quantité de correction, dans des cas où il est déterminé par l'élément de détermination que le niveau de la lumière réfléchie obtenu après la correction de l'aberration effectuée devient inférieur à une valeur cible.

# FIG. 1

D

50

RECORDING
MEANS

51

REFLECTED-
LIGHT LEVEL
DETECTING
MEANS

53

SPHERICAL
ABERRATION
CORRECTING
MEANS

52

CORRECTION
AMOUNT
DECIDING
MEANS

# FIG. 2

1: INFORMATION RECORDING SYSTEM

# FIG. 3A

RECORDING MARK
TO BE FORMED

RM1

RM2

# FIG. 3B

REFLECTED LIGHT
UNDER REPRODUCTION

→ t

# FIG. 3C

RECORDING PULSE
WAVEFORMS IN
RECORDING

Tp    Mp

RP

B

→ t

# FIG. 3D

DETECTED SIGNAL S4
UNDER RECORDING

→ t

# FIG. 3E

DETECTED SIGNAL S5
AFTER PROCESSING
AT LPF

Lw

Lp

Lr

→ t

# FIG. 4 A

(FROM AMPLIFIER 3) — 21 LPF — 22 S/H — (TO SYSTEM CONTROLLING UNIT 6)

# FIG. 4 B

(FROM AMPLIFIER 3) — 25 PEAK HOLD CIRCUIT (OR BOTTOM HOLD CIRCUIT) — (TO SYSTEM CONTROLLING UNIT 6)

# FIG. 4 C

(FROM AMPLIFIER 3) — 22 S/H — (TO SYSTEM CONTROLLING UNIT 6)

# FIG. 5A

DVD-R
SPHERICAL ABERRATION VS PIT LEVEL

FLUCTUATIONS IN
CORRECTION AMOUNT
FOR SPHERICAL ABERRATION

# FIG. 5B

DVD-R
SPHERICAL ABERRATION VS PIT RATIO

FLUCTUATIONS IN
CORRECTION AMOUNT
FOR SPHERICAL ABERRATION

FIG. 6

DVD-R
SPHERICAL ABERRATION VS JITTER, BETA

FIG. 7

SPHERICAL ABERRATION VS RECORDING POWER (DVD-R)

# FIG. 8

CONTROL OF CORRECTION
AMOUNT FOR SPHERICAL
ABERRATION UNDER RECORDING
(REFLECTED LIGHT = PIT LEVEL)

S1 — START OF RECORDING? → NO

YES

S2 — MEASURE PIT LEVEL L AT RECORDING START (Lt=L)

S3 —
CHANGE CORRECTION AMOUNT FOR
SPHERICAL ABERRATION
· IN THE FIRST RECORDING, SET INITIAL
CORRECTION AMOUNT IN GIVEN POLARITY.
· IN THE NEXT RECORDING, IF FIRST
RECORDING SHOWS IMPROVEMENT IN
SPHERICAL ABERRATION, SET CORRECTION
AMOUNT IN THE SAME POLARITY AS THE
LAST ONE;
IF. NOT, SET CORRECTION AMOUNT IN THE
OPPOSITE POLARITY TO THE LAST ONE

S4 — MEASURE PIT LEVEL L

S5 — IS PIT LEVEL L SMALLER THAN TARGET AMOUNT Lt? (L<Lt?) → NO

YES

S6 — CHANGE TARGET CORRECTION AMOUNT FOR SPHERICAL ABERRATION (Lt=L)

S7 — DELETE THE LAST CORRECTION AMOUNT FOR SPHERICAL ABERRATION

S8 — END OF RECORDING? → NO

YES

END

# FIG. 9

CONTROL OF CORRECTION
AMOUNT FOR SPHERICAL
ABERRATION UNDER RECORDING
(REFLECTED LIGHT=PIT RATIO)

S11 — START OF RECORDING? — NO

YES

S12 — MEASURE PIT RATIO R AT RECORDING START (Rt=R)

S13 — CHANGE CORRECTION AMOUNT FOR
SPHERICAL ABERRATION
· IN THE FIRST RECORDING, SET INITIAL
CORRECTION AMOUNT IN GIVEN POLARITY.
· IN THE NEXT RECORDING, IF FIRST
RECORDING SHOWS IMPROVEMENT IN
SPHERICAL ABERRATION, SET CORRECTION
AMOUNT IN THE SAME POLARITY AS THE
LAST ONE;
IF NOT, SET CORRECTION AMOUNT IN THE
OPPOSITE POLARITY TO THE LAST ONE

S14 — MEASURE PIT RATIO R

S15 — IS PIT RATIO R LARGER
THAN TARGET AMOUNT Rt?
R<Rt? — NO

YES

S16 — CHANGE TARGET CORRECTION
AMOUNT FOR SPHERICAL
ABERRATION (Rt=R)

S17 — DELETE THE LAST
CORRECTION AMOUNT FOR
SPHERICAL ABERRATION

S18 — END OF RECORDING? — NO

YES

END

# FIG.10A

<u>7a</u>

CONTROL UNIT ← S3

55

# FIG.10B

<u>7b</u>

EP 1 385 156 B1